(19) Europäisches Patentamt
European Patent Office
Office européen des brevets

(11) **EP 1 088 982 A2**

(12) **EUROPÄISCHE PATENTANMELDUNG**

(43) Veröffentlichungstag:
**04.04.2001 Patentblatt 2001/14**

(51) Int. Cl.⁷: **F02D 41/38**

(21) Anmeldenummer: **00108929.1**

(22) Anmeldetag: **27.04.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **30.09.1999 DE 19946910**

(71) Anmelder: **ROBERT BOSCH GMBH
70442 Stuttgart (DE)**

(72) Erfinder: **Hammer, Juergen
70734 Fellbach (DE)**

(54) **Verfahren und Einrichtung zur Ermittlung der Kraftstofftemperatur in einem Common-Rail-System**

(57)    Die Erfindung betrifft ein Verfahren und eine Einrichtung zur Ermittlung der Kraftstofftemperatur in einem Common-Rail-System mit sauggedrosselter Hochdruckpumpe und einer Zumeßeinheit, die der Hochdruckpumpe über einen von der Zumeßeinheit elektromagnetisch betätigten Stellkolben über eine Variation des Strömungsquerschnitts Kraftstoff zumißt.

Erfindungsgemäß wird die Kraftstofftemperatur $T_{Fluid}$ niederdruckseitig am Zulauf der Zumeßeinheit und $T_{HD}$ hochdruckseitig am Ausgang der Hochdruckpumpe rechnerisch über eine stationäre Energiebilanzgleichung mit den beteiligten Wärmeströmen ermittelt.

FIG 1

EP 1 088 982 A2

**Beschreibung**

Die Erfindung betrifft ein Verfahren und eine Vorrichtung zur Ermittlung der Kraftstofftemperatur in einem Common-Rail-System nach den Oberbegriffen der unabhängigen Ansprüche.

Nach dem Stand dar Technik werden zur Ermittlung der Kraftstofftemperatur Kraftstofftemperatursensoren verwendet, sowohl im Niederdruckförderkreis als auch am Rail. Ihre Aufgabe besteht darin, niederdruckseitig die maximal zulässige Kraftstofftemperatur zu überwachen und hochdruckseitig die Einspritzmenge über der Temperatur zu korrigieren.

Kraftstofftemperatursensoren sind i.d.R. elektronische Bauelemente mit einer für sie notwendigen extra Verdrahtung. Dadurch sind Montagearbeiten anfällig, die kostenintensiv sind und es können sich auch Fehlerquellen einschleichen.

Daher liegt der vorliegenden Erfindung die Aufgabe zugrunde, ein Verfahren und eine Einrichtung zur Ermittlung der Kraftstofftemperaturen in einem Common-Rail-System anzugeben, das/die an sich schon vorhandene Baugruppen nutzt und ohne extra Kraftstofftemperatursensoren auskommt.

Diese Aufgabe wird erfindungsgemäß durch die in den unabbängigen Ansprüchen gekennzeichneten Merkmale gelöst.

Die Erfindung hat die wesentlichen Vorteile, daß kein zusätzlicher Bauraum für ansonsten notwendige Kraftstofftemperatursensoren sowohl im Niederdruckkreis als auch im Hochdruckkreis notwendig sind, daß keine Hardware mit Kabelführungen zur Erfassung von Signalen erforderlich ist und daß bereits vorhandene Baugruppen in Form des Stromreglers für die Magnetspule der Zumeßeinheit genutzt werden.

Ein Ausführungsbeispiel der Erfindung ist in den Figuren dargestellt.

Es zeigen:

Fig. 1:    einen Schnitt durch die Zumeßeinheit,

Fig. 2:    ein Modell für die Zumeßeinheit,

Fig. 3:    den qualitativen Temperaturverlauf an der Zumeßeinheit,

Fig. 4:    ein Entscheidungs-Struktogramm,

Fig. 5:    ein Struktogramm zur Ermittlung der Kraftstofftemperatur niederdruckseitig,

Fig. 6:    ein Struktogramm zur Ermittlung der Kraftstofftemperatur hochdruckseitig.

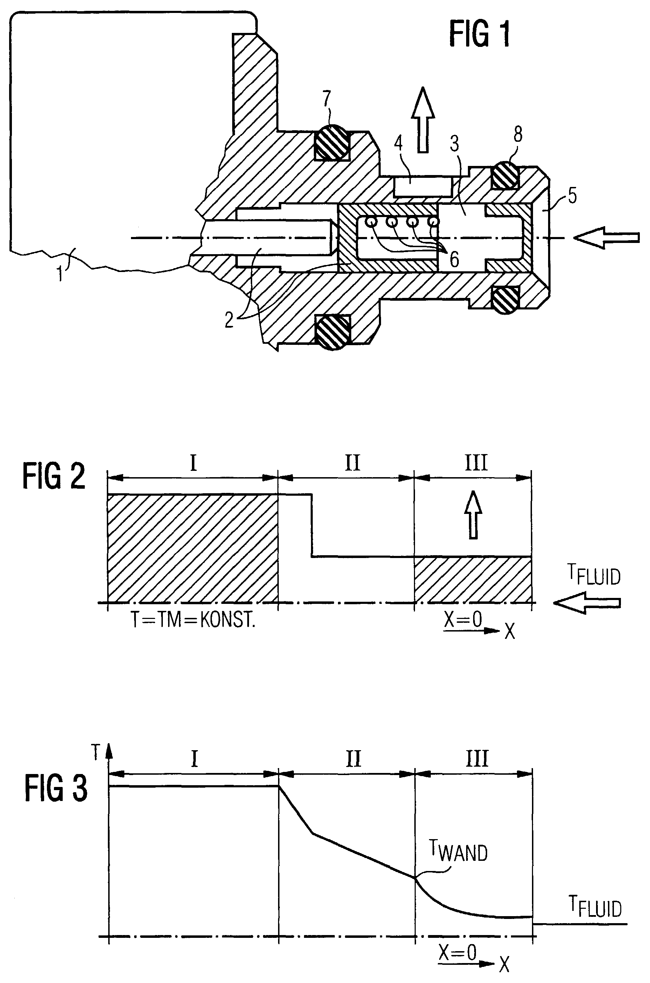

Die Fig. 1 zeigt mit dem Bezugszeichen 1 den Elektromagneten der Zumeßeinheit. Das Bezugszeichen 2 zeigt den Stellkolben, der in der Bohrung 3 durch den fließenden Strom im Elektromagneten 1 längsverschiebbar ist und den Strömungsquerschnitt 4, der bei der Zumessung von Kraftstoff an die Hochdruckpumpe (nicht dargestellt) variiert. 5 kennzeichnet den Öffnungsquerschnitt des Zulaufs niederdruckseitig. 6 ist eine Feder, gegen die der Stellkolben 2 arbeitet. 7,8 sind Dichtringe. Über den Stromregler (nicht dargestellt) des Elektromagneten 1 wird der Stellkolben längsverschoben, bis sich ein bestimmter zu erreichender Strömungsquerschnitt bei der Zumassung von Kraftstoff an die Hochdruckpumpe einstellt.

Nach Fig. 2 besteht das Modell für die Zumeßeinheit aus drei Teilen, wobei Teil I den Elektromagneten mit einer konstanten Temperaturverteilung, abhängig von der Stromaufnahme, darstellt. Teil II zeigt ein Stahlteil, in dem der Wärmestrom über den Effekt der Wärmeleitung fließt. Teil III zeigt ein weiteres Stahlteil als Rippe modelliert, das vom Medium Kraftstoff umströmt ist und in dessen Inneren Wärmeleitung und an dessen Äußerem Konvektions-Wärmeübertragung stattfindet.

Die Fig. 3 zeigt qualitativ den Temperaturverlauf über dem Modell der Fig. 2. Dabei ist für das Teil I die Temperatur $T_{Magnet}$ des Elektromagneten vorherrschend und als konstant angenommen. Im Teil II findet Wärmeleitung statt und die Temperatur nimmt Richtung Teil III unter Berücksichtigung der Geometrie quasi linear ab (lineare Wärmeleitung). Teil III zeigt den Temperaturverlauf längs der Rippe mit einer exponentiell abklingenden Temperatur in Richtung des Kraftstoffzulaufs.

Aus dem Modell der Fig. 2 und 3 und den sich ergebenden Wärmeströmen werden die Temperaturen $T_{Fluid}$ des Mediums Kraftstoff am Zulauf der Zumeßeinheit niederdruckseitig und $T_{HD}$ hochdruckseitig am Hochdruckausgang der Hochdruckpumpe rechnerisch ermittelt.

Das Modell der Fig. 2 und 3 basiert auf einer stationären Energiebilanz um den Elektromagneten 1 der Zumeßeinheit, dessen stationäre, mittlere Temperatur $T_{Magnet}$ von den Wärmeströmen

Q'_netto,A $\quad$ = Wärmeübertragung an/von der Umgebung

Q'_Quell,el $\quad$ = Anteil der elektrischen Leistung, die im Elektromagneten in Wärme umgewandelt wird,

Q'_Rippe $\quad$ = Wärmestrom, der konvektiv vom umströmenden Kraftstoff am Stellkolben der Zumeßeinheit abgeführt wird,

abhängt. Der im Modell der Fig. 3 dargestellte Temperaturverlauf wird als eindimensional angenommen.

Bei der Aufstellung der Berechnungsgleichungen wird zunächst aus dem Stromanteil I des Stromreglers (Temperaturabhängigkeit des elektrischen Widerstands des Elektromagneten der Zumeßeinheit) die Größe Q'_Quell,el berechnet. Zusätzlich liefert der Stromanteil I des Stromreglers die mittlere Temperatur des Elektromagneten, $T_{Magnet}$. Zusammen mit der Lufttemperatur $T_{Luft}$ und dem Wärmeübergang an die Umgebung kann der Wärmestrom Q'_netto,A berechnet werden.

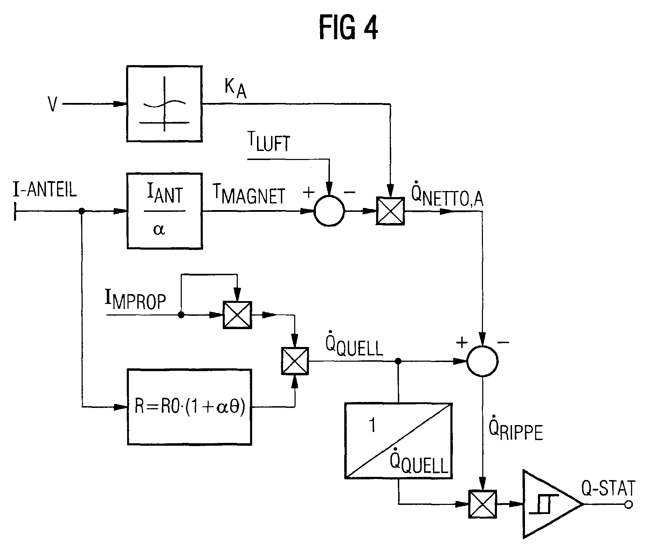

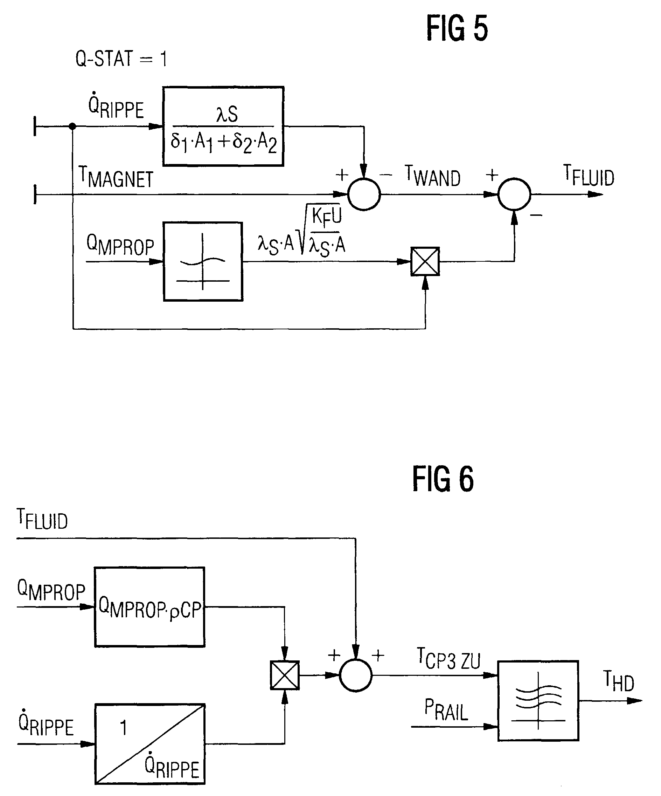

Sind die Wärmeströme Q'_Quell,el und Q'_netto,A signifikant verschieden voneinander, so wird ein endlicher Wärmestrom Q'_Rippe über die Zumeßeinheit konvektiv abgeführt. In diesem Fall läßt sich mit der Struktur gemäß Fig. 5 die niederdruckseitige Zulauftemperatur $T_{Fluid}$ an der Zumeßeinheit bestimmen. Die Entscheidungsstruktur aus der Fig. 4 liefert dabei die Ausgabe Q_stat = 1.

Sind hingegen die Wärmeströme Q'_Quell,el und Q'_netto,A nahezu identisch, beeinflußt die Umströmung des Kraftstoffs die Magnettemperatur kaum, so daß der Wärmestrom Q'_Rippe verschwindend klein wird und nicht zur Ermittlung der gesuchten Temperatur $T_{Fluid}$ herangezogen werden kann. Für Q_stat gilt in diesem Fall: Q_stat = 0

Mit Hilfe der in Fig. 6 dargestellten Struktur kann von $T_{Fluid}$ auf die Temperatur $T_{HD}$ des unter Hochdruck stehenden Kraftstoffs geschlossen werden.

Kern der Erfindung ist nun, die Temperaturen $T_{Fluid}$ und $T_{HD}$ ohne direkte Messung aus dem Modell zu ermitteln. Dazu liefert der Stromanteil I des Stromreglers für den Strom am Elektromagneten der Zumeßeinheit die mittlere Temperatur $T_{Magnet}$.

Die Modellgleichungen lauten nun:

Aus der Energiebilanz am Elektromagneten gilt:

Q'_Quell - Q'_netto,A = Q'_Rippe mit
Q'_Quell aus $P_{EL} = Q'\_Quell = U_{EL}*I_{EL} = I^2_{EL}*R_\theta$
Q'_netto,A aus $Q' = K_A*A(T_\mu - T_U)$

mit $K_A$ Wärmeübergangskoeffizient

Aus dem Stromanteil I des Stromreglers folgt:

$$R_\theta = Ro(1 + \alpha\theta) \text{ mit}$$

$$\alpha\theta = I\text{Anteil daraus folgt}$$

$$T_{Magnet} = \theta = I\text{Anteil}/\alpha$$

mit $\alpha$ Widerstandskoeffizient

Für den Wärmestrom in die Rippe gilt:

$$Q' = (T_{Magnet} - T_{Wand})/\lambda s * (\delta 1*A1 + \delta 2*A2)$$

Aus dem Rippenmodell folgt die Beziehung:

$$Q'\_Rippe = (T_{Wand} - T_{Fluid})\lambda s*A*(K_F U/\lambda A)^{1/2}$$

mit $K_F$ Wärmeübergangskoeffizient Fluid

Aus der Gleichsetzung von Q'_Leitung und Q'_Rippe folgt:

$$T_{Fluid} = T_{Wand} - Q'\_Rippe/(\lambda s*A(\alpha*U/\lambda*A)^{1/2})$$

$$T_{Wand} = T_{Magnet} - Q'\_Rippe * \lambda s/(\delta 1*A1 + \delta 2*A2)$$

Gemäß Struktogramm der Fig. 4 wird der I-Anteil des Stromreglers in einer ersten Rechenoperation durch α geteilt, wobei α der Widerstandskoeffizient über der Temperatur ist, woraus sich die Temperatur $T_{Magnet}$ ergibt. Am ersten Verknüpfungspunkt wird gebildet $T_{Magnet}$-$T_{Luft}$ und diese Größe wird einem Eingang eines Multiplizierers zugeführt, dessen anderem Eingang die Größe $K_A$*A zugeführt ist, die aus der Ausströmgeschwindigkeit und Bewertung mittels einer Kennlinie hervorgeht. Am Ausgang des Multiplizierers steht die Größe Q'_netto,A an. Aus dem I-Anteil des Stromreglers geht die Größe R = Ro(1 + αθ) hervor, die in einem zweiten Multiplizierer mit dem Strom $I^2$ multipliziert wird zur Bildung des Wärmestroms Q'_Quell. An einem zweiten Verknüpfungspunkt wird Q'_Quell - Q'_netto,A = Q'_Rippe gebildet und in einem dritten multiplikativen Schritt mit dem Kehrwert von Q'_Quell verknüpft.

Sind Q'_Quell und Q'_netto,A signifikant voneinander verschieden, so ist die Ausgabe Q_stat = 1.Sind hingegen die Wärmaströme Q'_Quell,el und Q'_netto,A nahezu identisch, ist die Ausgabe Q_stat = 0.

Für Q-stat = 1 läßt sich die Kraftstofftemperatur $T_{Fluid}$ berechnen, wobei zur Veranschaulichung das Struktogramm der Fig. 5 dient.

Der Wärmestrom Q'_Rippe wird bewertet mit λs/(δ1A1 + δ2A2) . Dieser Wert wird von $T_{Magnet}$ am ersten Verknüpfungspunkt subtrahiert und es ergibt sich die Temperatur $T_{WAnd}$.

Es wird ferner durch Bewerten von Q'Mprop über eine Kennlinie gebildet $\lambda sA(K_F/\lambda A)^{1/2}$. Diese Größe wird mit Q'_Rippe multiplikativ verknüft und das Ergebnis ist einem zweiten Verknüpfungspunkt zusammen mit der Temperatur $T_{Wand}$ zugeführt. Die Ausgangsgröße des zweiten Verknüpfungspunktes ist die zu ermittelnde Kraftstofftemperatur $T_{Fluid}$.

Das Struktogramm der Fig. 6 veranschaulicht die Berechnung der Kraftstofftemperatur $T_{HD}$ hochdruckseitig. Dabei wird die Größe des Massestroms VMprop durch die Zumesseinheit bewertet mit dem Faktor ρcp und von der Größe Q'Rippe wird der Kehrwert gebildet und multiplikativ mit der bewerteten Größe von VMprop verknüpft. Die Ausgangsgröße dieser multipilkativen Verknüpfung wird an einem additiven Verknüpfungspunkt mit der Temperatur $T_{Fluid}$ verknüpft.

Die Ausgaugsgröße dieses additiven Verknüpfungspunktes ist die Temperatur $T_{CP3zu}$ als Kraftstofftemperatur am Zulauf der Hochdruckpumpe. Diese Größe wird nun in einem Kennfeld mit dem Raildruck als parametrische Größe bewertet und es ergibt sich somit die Kraftstofftemparatur $T_{HD}$ hochdruckseitig.

Als Energiebilanz für die Berechnung der Temperatur $T_{cp3zu}$ am Zulauf der Hochdruckpumpe gilt die folgende Gleichung:

$$Q'\_Rippe = V_{Mprop} * \rho_{Fl}*C_{pFl} (T_{CP3zu} - T_{Fluid})$$

Über die Verdichtung der Hochdruckpumpe entsteht die Kraftstofftemperatur $T_{HD}$ hochdruckseitig. Dabei sind die Kennlinien der Hochdruckpumpe für die Verdichtung heranzuziehen.

Dabei galten folgende Gleichungen:

$$T_{HD} = T_2(p_{Rail},h_2) \text{ mit}$$

$$h_2 = (h_{2rev} - h_1)/\eta + h_1$$

mit

| | |
|---|---|
| $h_2$ | = spezielle Enthalpie des Kraftstoffs am Punkt 2 |
| $h_{2rev}$ | = spezielle Enthalpie des Kraftstoffs bei reversibler Zustandsänderung |
| $h_1$ | = spezielle Enthalpie des Kraftstoffs am Punkt 1 |
| η | = Härtegrad den Verdichtung |
| $p_{Rail}$ | = Druck im Rail des Common-Rail-Systems |
| $T_{Cp3zu}$ | = Zulauftemperatur Kraftstoff zur Hochdruckpumpe CP 3 |
| $\rho_{Fl}$ | = Dichte des flüssigen Kraftstoffs |
| $C_{pFl}$ | = spezielle Wärmekapazität des Kraftstoffs |

Bezugszeichenliste

| | |
|---|---|
| 1 | Elektromagnet |
| 2 | Stellkolben |
| 3 | Bohrung |
| 4 | Strömungsquerschnitt |
| 5 | Öffnungsquerschnitt |

6      Feder

7      Dichtring

8      Dichtring

**Patentansprüche**

1.  Verfahren zur Ermittlung der Kraftstofftemperatur in einem Common-Rail-System mit sauggedrosselter Hochdruckpumpe und einer Zumeßeinheit, wobei die Kraftstofftemperatur in einem Niederdruckbereich und/oder einem Hochdruckbereich (Rail) ermittelt wird, dadurch gekennzeichnet, daß die Kraftstofftemperaturen (Tfluid) im Niederdruckbereich und/oder die Kraftstofftemperatur (THD) im Hochdruckbereich rechnerisch mittels einer Energiebilanz ermittelt werden.

2.  Verfahren nach Anspruch 1, dadurch gekennzeichnet, daß die Kraftstofftemperaturen (Tfluid) im Niederdruckbereich am Zulauf der Zumeßeinheit und/oder die Kraftstofftemperatur (THD) im Hochdruckbereich am Ausgang der Hochdruckpumpe ermittelt wird.

3.  Verfahren nach Anspruch 1 oder 2, dadurch gekennzeichnet, daß die Kraftstofftemperatur mittels einer Energiebilanz ausgehend von wenigstens den beteiligten Wärmeströmen und/oder dem Anteil der elektrischen Leistung, die in der Zumeßeinheit in Wärme umgewandelt wird, bestimmt wird mittels des I-Anteils des Stromreglers, welcher den Temperatureinfluß des elektrischen Widerstands an der Spule des Magnet-Proportionalventils kompensiert.

4.  Verfahren nach Anspruch 3, dadurch gekennzeichnet, daß die Wärmeströme, wenigstens die Wärmeübertragung an die Umgebung, die Wärmeübertragung von der Umgebung und/oder der Wärmestrom, der konvektiv vom umströmenden Kraftstoff von der Zumeßeinheit abgeführt wird, berücksichtigt werden.

5.  Verfahren nach einem der vorherigen Ansprüche, dadurch gekennzeichnet, daß die Kraftstoff-Temperatur im Niederdruckbereich ausgehend von wenigstens einer der Größen Temperatur an der Wandung, mittlere Temperatur der Zumeßeinheit, Umgebungstemperatur, Fläche, elektrische Leistung der Zumeßeinheit, elektrische Spannung der Zumeßeinheit, Stromfluß in der Zumeßeinheit und/oder Widerstandswert der Zumeßeinheit bestimmt wird.

6.  Verfahren nach einem der vorigen Ansprüche, dadurch gekennzeichnet, daß die Kraftstofftemperatur des Hochdruckbereichs THD ausgehend von wenigstens dem Massestrom durch die Zumeßeinheit berechnet und/oder dem Druck im Hochdruckbereich sowie dem Härtegrad der Verdichtung bestimmt wird.

7.  Einrichtung zur Ermittlung der Kraftstofftemperaturen nach den Ansprüchen 1 oder 2, dadurch gekennzeichnet, daß die Berechnung der Kraftstofftemperaturen TFluid niederdruckseitig und THD hochdruckseitig über eine Microcomputer-Recheneinheit des Steuergeräts für Einspritzung oder/und Zündung erfolgt.

# FIG 1

## FIG 2

I     II     III

T=TM=KONST.

$T_{FLUID}$

$\underline{X=0}$ → X

## FIG 3

T

I     II     III

$T_{WAND}$

$T_{FLUID}$

$\underline{X=0}$ → X

# FIG 4

## FIG 5

Q-STAT = 1

$$\dot{Q}_{RIPPE}$$

$$\frac{\lambda S}{\delta_1 \cdot A_1 + \delta_2 \cdot A_2}$$

$T_{MAGNET}$

$+$ $-$ $T_{WAND}$ $+$ $T_{FLUID}$

$-$

$Q_{MPROP}$

$$\lambda_S \cdot A \sqrt{\frac{K_F U}{\lambda_S \cdot A}}$$

## FIG 6

$T_{FLUID}$

$Q_{MPROP}$

$Q_{MPROP} \cdot \rho CP$

$+$ $+$ $T_{CP3\,ZU}$

$T_{HD}$

$\dot{Q}_{RIPPE}$

$$\frac{1}{\dot{Q}_{RIPPE}}$$

$P_{RAIL}$